# EUROPEAN PATENT APPLICATION

(11) **EP 4 542 928 A1**
(43) Date of publication of application: **23.04.2025**
(21) Application number: 23838594.2
(22) Date of filing: 06.06.2023
(51) Int. Cl.: H04L 9/40

(54) **ACCESS CONTROL METHOD, ELECTRONIC DEVICE AND STORAGE MEDIUM**

(30) Priority: 11.07.2022 CN 202210810446
(71) Applicant: ZTE Corporation, Shenzhen, Guangdong 518057 (CN)
(72) Inventor: JIANG, Zhihong, Shenzhen, Guangdong 518057 (CN); ZHOU, Na, Shenzhen, Guangdong 518057 (CN); YAN, Xincheng, Shenzhen, Guangdong 518057 (CN); JI, Hongwei, Shenzhen, Guangdong 518057 (CN); SONG, Lin, Shenzhen, Guangdong 518057 (CN)
(74) Representative: Savi, Massimiliano
(86) International application number: PCT/CN2023/098613
(87) International publication number: WO 2024/012100

(57) **Abstract**

Provided in the present application are an access control method, an electronic device and a storage medium. The access control method comprises: receiving a service access right certificate request from a right certificate request initiating device (S110); determining a forwarding path according to a source address and a destination address comprised in the service access right certificate request (S120); sending a right certificate authorization request to a service resource manager, so that the service resource manager determines an authorization result according to the source address and the destination address comprised in the right certificate authorization request (S130); receiving an authorization result returned by the service resource manager (S140); and when the authorization result represents authorization permission, sending a right certificate application result to the right certificate request initiating device, wherein the right certificate application result comprises right certificate information of each forwarding node in the forwarding path, and the right certificate information is used for being carried in a service message sent by a client to a server (S150).

## Description

### CROSS-REFERENCE TO RELATED APPLICATION

This application is filed on the basis of Chinese patent application No. 202210810446.5 filed July 11, 2022, and claims priority to the Chinese patent application, the entire contents of which are incorporated herein by reference.

### TECHNICAL FIELD

The present disclosure relates to the technical field of network communication security, and in particular, to an access control method, an electronic device, and a storage medium.

### BACKGROUND

With the accelerated integration of digital technologies and the real economy, a large amount of economic vitality continues to migrate online, and industries such as games, live streaming, e-commerce, and online education are prospering. Massive terminal devices, diversified access methods, and numerous services have enriched network functions, but also intensify the security threats to servers.

For example, the number of Distributed Denial of Service (DDOS) attacks is increasing rapidly. Conventional defense methods against DDOS attacks include traffic cleaning and blackholing. Such passive defense methods fail to provide a predictive protection effect, and due to the lack of participation of networks, cannot achieve active defense and protection against near-source attacks to ensure the security of network services.

### SUMMARY

Embodiments of the present disclosure provide an access control method, an electronic device, and a computer-readable storage medium.

In accordance with a first aspect of the present disclosure, an embodiment provides an access control method, performed by a ticket generation controller, the method including: receiving a service access ticket request from a ticket request initiating device; determining a forwarding path according to a source address and a destination address which are both included in the service access ticket request; sending a ticket authorization request to a service resource manager, such that the service resource manager determines an authorization result according to the source address and the destination address which are both included in the ticket authorization request; receiving the authorization result returned by the service resource manager; and sending a ticket application result to the ticket request initiating device in response to the authorization result indicating that authorization is allowed. The ticket application result includes ticket information of each of at least one forwarding node in the forwarding path, and the ticket information is carried in a service packet sent by a client to a server.

In accordance with a second aspect of the present disclosure, an embodiment provides an access control method, performed by a service resource manager, the method including: receiving a ticket authorization request from a ticket generation controller; determining an authorization result according to a source address and a destination address which are both included in the ticket authorization request; and returning the authorization result to the ticket generation controller, such that the ticket generation controller determines whether to send a ticket application result to a ticket request initiating device according to the authorization result. The ticket application result includes ticket information of each of at least one forwarding node in a forwarding path, and the ticket information is carried in a service packet sent by a client to a server.

In accordance with a third aspect of the present disclosure, an embodiment provides an access control method, performed by a forwarding node, the method including: receiving a service packet from a client; performing an access verification on the service packet according to ticket information carried in the service packet; and forwarding the service packet in response to the service packet passing the access verification.

In accordance with a fourth aspect of the present disclosure, an embodiment provides an access control method, performed by a client, the method including: sending, as a ticket request initiating device, a service access ticket request to a ticket generation controller, where the service access ticket request includes a source address and a destination address of a service packet to be sent; receiving a ticket application result returned by the ticket generation controller according to the service access ticket request, where the ticket application result includes a forwarding path and ticket information of each of at least one forwarding node in the forwarding path; and sending the service packet carrying the ticket information to the at least one forwarding node according to the forwarding path.

In accordance with a fifth aspect of the present disclosure, an embodiment provides an access control method, performed by an access gateway, the method including: receiving a service packet from a client; generating a service access ticket request in response to determining that the service packet requires applying for a ticket, where the service access ticket request includes a source address and a destination address of the service packet; sending, as a ticket request initiating device, the service access ticket request to a ticket generation controller; receiving a ticket application result returned by the ticket generation controller according to the service access ticket request, where the ticket application result includes a forwarding path and ticket information of each of at least one forwarding node in the forwarding path; and incorporating the ticket information to a service packet to be subsequently sent by the client, and sending the service packet carrying the ticket information to the at least one forwarding node according to the forwarding path.

In accordance with a sixth aspect of the present disclosure, an embodiment provides an access control method, performed by a ticket request agent device, the method including: receiving a signaling request from a signaling request initiating device; generating a service access ticket request according to a ticket application flag included in the signaling request, where the service access ticket request includes a source address and a destination address of a service packet to be sent; sending, as a ticket request initiating device, the service access ticket request to a ticket generation controller; receiving a ticket application result returned by the ticket generation controller according to the service access ticket request, where the ticket application result includes a forwarding path and ticket information of each of at least one forwarding node in the forwarding path; and returning the ticket application result to the signaling request initiating device.

In accordance with a seventh aspect of the present disclosure, an embodiment provides an access control method, performed by a client, the method including: sending, as a signaling request initiating device, a signaling request to a ticket request agent device, where the signaling request includes a source address and a destination address of a service packet to be sent and a ticket application flag; receiving a ticket application result returned by the ticket request agent device according to the signaling request, where the ticket application result includes a forwarding path and ticket information of each of at least one forwarding node in the forwarding path; and sending the service packet carrying the ticket information to the at least one forwarding node according to the forwarding path.

In accordance with an eighth aspect of the present disclosure, an embodiment provides an access control method, performed by an access gateway, the method including: receiving a signaling request from a client, where the signaling request includes a source address and a destination address of a service packet to be sent; incorporating a ticket application flag into the signaling request, and sending, as a signaling request initiating device, the signaling request carrying the ticket application flag to a ticket request agent device; receiving a ticket application result returned by the ticket request agent device according to the signaling request, where the ticket application result includes a forwarding path and ticket information of each of at least one forwarding node in the forwarding path; and incorporating the ticket information into a service packet to be subsequently sent by the client, and sending the service packet carrying the ticket information to the at least one forwarding node according to the forwarding path.

In accordance with a ninth aspect of the present disclosure, an embodiment provides an electronic device, including: a memory, a processor, and a computer program stored in the memory and executable by the processor, where the computer program, when executed by the processor, causes the processor to implement the access control method in accordance with any one of the first aspect to the eighth aspect.

In accordance with a tenth aspect of the present disclosure, an embodiment provides a computer-readable storage medium, storing a computer program which, when executed by a processor, causes the processor to implement the access control method in accordance with any one of the first aspect to the eighth aspect.

### BRIEF DESCRIPTION OF DRAWINGS

FIG. 1 is a schematic flowchart of an access control method according to an embodiment of the present disclosure;
FIG. 2 is a schematic flowchart of an access control method according to another embodiment of the present disclosure;
FIG. 3 is a schematic flowchart of an access control method according to another embodiment of the present disclosure;
FIG. 4 is a schematic flowchart of an access control method according to another embodiment of the present disclosure;
FIG. 5 is a diagram of an implementation environment of an access control method according to an embodiment of the present disclosure;
FIG. 6 is a schematic flowchart of an access control method according to another embodiment of the present disclosure;
FIG. 7 is a schematic flowchart of an access control method according to another embodiment of the present disclosure;
FIG. 8 is a schematic flowchart of an access control method according to another embodiment of the present disclosure;
FIG. 9 is a schematic flowchart of an access control method according to another embodiment of the present disclosure;
FIG. 10 is a schematic flowchart of an access control method according to another embodiment of the present disclosure;
FIG. 11 is a schematic flowchart of an access control method according to another embodiment of the present disclosure;
FIG. 12 is a schematic flowchart of an access control method according to another embodiment of the present disclosure;
FIG. 13 is a schematic flowchart of an access control method according to another embodiment of the present disclosure;
FIG. 14 is a schematic flowchart of an access control method according to another embodiment of the present disclosure;
FIG. 15 is a schematic flowchart of an access control method according to another embodiment of the present disclosure; and
FIG. 16 is a schematic structural diagram of an electronic device according to an embodiment of the present disclosure.

### DETAILED DESCRIPTION

Objectives, technical schemes, and advantages of the present disclosure will be clearer from a detailed description of embodiments of the present disclosure in conjunction with accompanying drawings. It should be understood that the embodiments described herein are merely used for illustrating the present disclosure, and are not intended to limit the present disclosure.

It should be understood that in the description of the embodiments of the present disclosure, the terms such as "first" and "second" used herein are merely used for distinguishing technical features, and are not intended to indicate or imply relative importance, or implicitly point out the number of the indicated technical features, or implicitly point out the order of the indicated technical features. The term "at least one" means one or more and the term "a plurality of" means two or more. The term "and/or" is used for describing an association between associated objects and representing that three associations may exist. For example, "A and/or B" may indicate that only A exists, only B exists, and both A and B exist, where A and B may be singular or plural. The character "/" generally indicates an "or" relation between the associated objects. "At least one of" and similar expressions refer to any combination of items listed, including one item or any combination of a plurality of items. For example, at least one of a, b, or c may represent a, b, c, "a and b", "a and c", "b and c", or "a, b, and c", where a, b, and c may be singular or plural.

In addition, the technical features involved in various embodiments of the present disclosure described below can be combined with each other if not in collision.

With the accelerated integration of digital technologies and the real economy, a large amount of economic vitality continues to migrate online, and industries such as games, live streaming, e-commerce, and online education are prospering. Massive terminal devices, diversified access methods, and numerous services have enriched network functions, but also intensify the security threats to servers.

For example, the number of DDOS attacks is increasing rapidly. Conventional defense methods against DDOS attacks include traffic cleaning and blackholing. Such passive defense methods fail to provide a predictive protection effect, and due to the lack of participation of networks, cannot achieve active defense and protection against near-source attacks to ensure the security of network services.

In view of the above, according to embodiments of the present disclosure, an access control method, an electronic device, and a computer-readable storage medium are disclosed. They can provide active defense against network attacks to improve the security of network services.

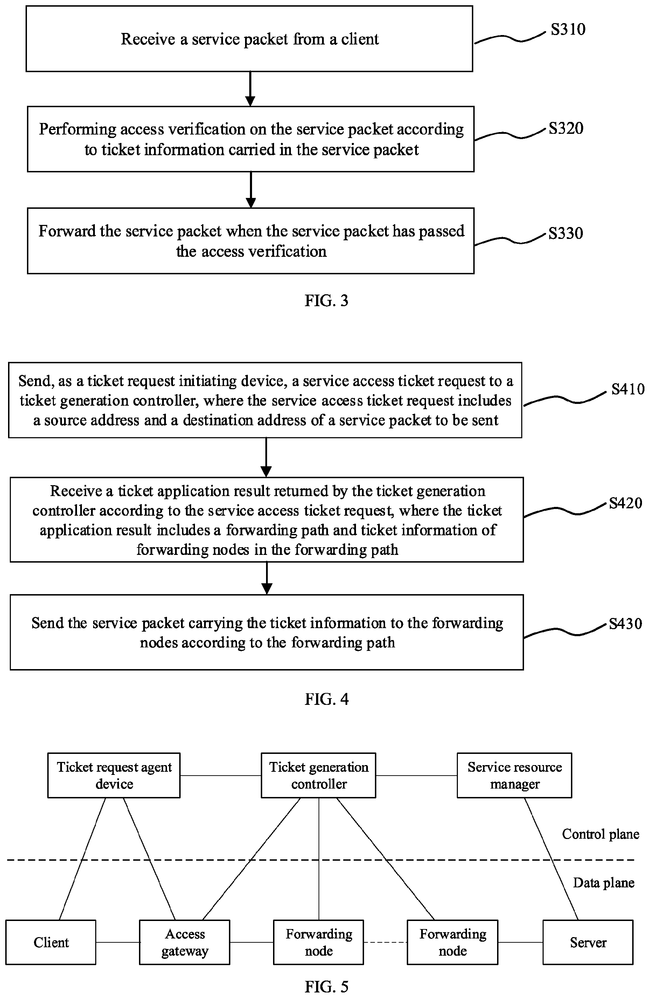

FIG. 5 is a diagram of an implementation environment of an access control method according to an embodiment of the present disclosure. As shown in FIG. 5, the implementation environment of the access control method according to the embodiment of the present disclosure is a communication system including a client, an access gateway, one or more forwarding nodes, a server, a ticket request agent device, a ticket generation controller, and a service resource manager. The communication system may be divided into a control plane and a data plane. The control plane includes the ticket request agent device, the ticket generation controller, and the service resource manager. The ticket generation controller is respectively in communication connection with the ticket request agent device and the service resource manager, and is in communication connection with the forwarding nodes and the access gateway. The ticket request agent device is in communication connection with the client and the access gateway. The service resource manager is in communication connection with the server. The data plane includes the client, the access gateway, the forwarding nodes, and the server. The client is in communication connection with the server through the access gateway and at least one forwarding node.

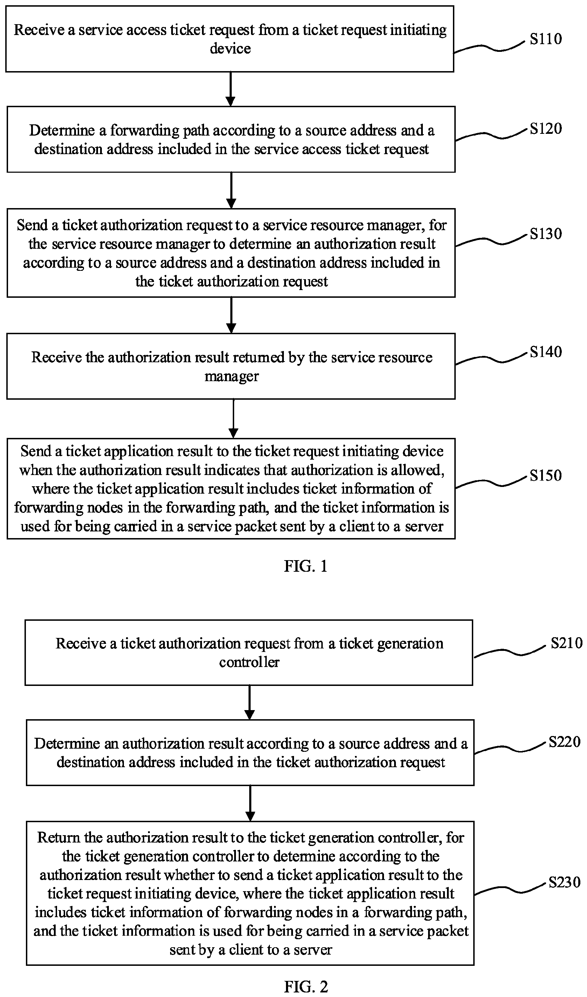

An access control method according to an embodiment of the present disclosure will be described first. The method is performed by a ticket generation controller. FIG. 1 is a schematic flowchart of an access control method according to an embodiment of the present disclosure. As shown in FIG. 1, the access control method according to the embodiment of the present disclosure includes, but is not limited to, following steps S110 to S150.

At the step S110, a service access ticket request is received from a ticket request initiating device.

At the step S120, a forwarding path is determined according to a source address and a destination address included in the service access ticket request.

At the step S130, a ticket authorization request is sent to a service resource manager, such that the service resource manager determines an authorization result according to a source address and a destination address included in the ticket authorization request.

At the step S140, the authorization result returned by the service resource manager is received.

At the step S150, a ticket application result is sent to the ticket request initiating device when the authorization result indicates that authorization is allowed. The ticket application result includes ticket information of each of at least one forwarding node in the forwarding path, and the ticket information is configured to be carried in a service packet sent by a client to a server.

It can be understood that a service access is authorized by the service resource manager and the ticket information is delivered by the ticket generation controller, i.e., a client that legitimately accesses a service is authorized by a control plane channel in the communication system, such that a service packet carrying the ticket information from the client can pass access verification in a forwarding plane of the communication system. As such, malicious injection of network attack traffic can be prevented, and network and service resources can be effectively protected. In addition, because control-plane network elements have strict requirements on the packet format and length, it can reduce the possibility of malicious traffic attacking core network elements and service entities, thereby improving the security of network services.

It should be understood that the service access ticket request is configured to request an access ticket from the server, and the service access ticket request includes a source address of the client and a destination address of the server.

It can be understood that before the client accesses the server, the ticket request initiating device constructs the service access ticket request and sends the service access ticket request to the ticket generation controller, such that the ticket generation controller receives the service access ticket request from the client. The ticket request initiating device may be the client, an access gateway, a ticket request agent device, etc., which will be described through the following embodiments.

In some embodiments, before the step S110, the access control method further includes a following step.

Feedback information from the forwarding nodes is received.

After a forwarding path is determined according to a source address and a destination address included in the service access ticket request and before a ticket application result is sent to the ticket request initiating device, the method further includes a following step.

The ticket information of each of the forwarding nodes in the forwarding path is generated according to the node information, a ticket generation factor which is preset, and the source address and the destination address included in the service access ticket request.

The node information includes a node address, a node interface, a node link state, and whether a ticket function is supported.

In some embodiments, before the step S110, the access control method further includes a following step.

The ticket generation factor is sent to the forwarding node. The ticket generation factor is configured to generate ticket verification information, and the ticket verification information is configured to perform the access verification on the ticket information carried in the service packet sent by the client to the server.

It can be understood that the ticket generation factor is configured to generate the ticket verification information and the ticket information corresponding to each of the forwarding nodes in the forwarding path. In some embodiments, the ticket generation controller and the forwarding nodes respectively generate the ticket information and the ticket verification information according to the source address of the client, the destination address of the server, the node address, and the ticket generation factor. Therefore, in the subsequent access process, each of the forwarding nodes performs the access verification on the ticket verification information generated by the forwarding nodes and the ticket verification information carried in the service packet. If the verification is successful, the forwarding nodes forward the service packet. If the verification fails, the forwarding nodes discard the service packet or lowers a forwarding priority of the service packet.

In some embodiments, a Hash-based Message Authentication Code (HMAC) is calculated according to the ticket generation factor, the source address of the client, the destination address of the server, and an ingress interface address and an egress interface address of the forwarding node, and the last two bits of the HMAC are determined as the ticket information of the forwarding node. Therefore, in the subsequent access process, the forwarding node performs the access verification on the ticket verification information and the ticket information carried in the service packet. If the two are identical, it is determined that the verification is successful; if the two are not identical, it is determined that the verification fails.

In some embodiments, the step S120 includes a following step.

The forwarding path is determined according to the node information and the source address and the destination address included in the service access ticket request.

It can be understood that the node information from the forwarding nodes is received, and the forwarding path is determined according to the node information and the source address and the destination address included in the service access ticket request. In some embodiments, the forwarding path between the client and the server is determined from forwarding nodes connecting the client and the server according to a preset path planning algorithm and the node link state.

In an embodiment, each of the forwarding nodes corresponds to a different ticket generation factor.

It can be understood that each forwarding node corresponds to a different ticket generation factor, such that each forwarding node performs the access verification on the service packet according to the different ticket generation factor. As such, cracking of one ticket generation factor does not affect other ticket generation factors, thereby further improving the security of network services.

In some embodiments, after the ticket generation factor is sent to the forwarding node, the access control method further includes following steps.

A ticket update request is received from the service resource manager.

The ticket generation factor in the forwarding node is updated and synchronized according to the ticket update request.

It can be understood that the ticket generation factor in the ticket generation controller is updated according to the ticket update request from the server resource manager, and is synchronized with the ticket generation factor in the forwarding node. In some embodiments, when processing resources of the server decrease, access to the server is reduced or stopped by updating the ticket generation factor.

In an embodiment, after the ticket generation factor is sent to the forwarding node, the access control method according to the embodiment of the present disclosure further includes a following step.

The ticket generation factor in the forwarding node is periodically updated and synchronized.

It can be understood that the ticket generation factor in the ticket generation controller and the forwarding node is updated periodically, such that the ticket information has a validity period. As such, the problem that the client can access the service without restriction only after being authorized once can be avoided, and even if the ticket generation factor is cracked, network attacks can be slowed down, thereby further improving the security of network services.

It can be understood that the ticket application result includes the forwarding path and the ticket information of each of the forwarding nodes in the forwarding path. The ticket generation controller sends the ticket application result to the client, such that the client can send the service packet carrying the ticket information to the forwarding nodes according to the forwarding path.

In an embodiment, as shown in FIG. 5, an implementation environment of the access control method according to the embodiment of the present disclosure includes an access gateway which serves as a ticket request initiating device to apply for a service access ticket on the behalf of the client.

It can be understood that if the client does not support the ticket function due to its own capabilities or other factors and cannot initiate a service access ticket request, the access gateway in the vicinity of the client may initiate the service access ticket request on the behalf of the client. The access gateway in the vicinity of the client receives a service packet sent by the client to the server. The access gateway determines, according to a source address and a destination address included in the service packet, whether the client is accessing the server for the first time and whether the client has been authorized by the server. If the client is accessing the server for the first time and has not been authorized by the server, the access gateway determines that the service packet requires applying for a ticket, constructs a service access ticket request of the client, and sends the service access ticket request to the ticket generation controller. Then, the access gateway receives a ticket application result returned by the ticket generation controller according to the service access ticket request. The ticket application result includes the forwarding path and the ticket information of each of the forwarding nodes in the forwarding path. The ticket information is incorporated into a service packet to be subsequently sent by the client, and the service packet carrying the ticket information is sent to the forwarding nodes according to the forwarding path.

It can also be understood that after the ticket generation controller receives from the service resource manager an authorization result indicating that authorization is allowed, the ticket generation controller sends the ticket application result to the access gateway. The access gateway stores the ticket information after receiving the ticket application result. In the subsequent service access performed by the client, the access gateway determines whether a service packet sent by the client to the server has been authorized, and if so, the service packet with the incorporated ticket information is forwarded to the service packet.

It should be understood that by using the access gateway in the vicinity of the client to initiate a ticket application, accept ticket information, and incorporate the ticket information into data packets to be sent subsequently, the requirements on the client can be lowered, thereby improve the compatibility and deployability with existing clients.

In another embodiment, as shown in FIG. 5, an implementation environment of the access control method according to the embodiment of the present disclosure includes a ticket request agent device which serves as a ticket request initiating device to apply for a service access ticket on the behalf of the client.

It can be understood that the ticket request agent device, as the ticket request initiating device, applies for a service access ticket, so that the application for a ticket can be realized through a signaling channel. The ticket request agent device receives a signaling request from a signaling request initiating device, and generates a service access ticket request including a source address and a destination address of a service packet to be sent according to a ticket application flag included in the signaling request. Then, the ticket request agent device, as a ticket request initiating device, sends the service access ticket request to the ticket generation controller, and receives the ticket application result returned by the ticket generation controller according to the service access ticket request. The ticket application result includes a forwarding path and ticket information of each of the forwarding nodes in the forwarding path. The ticket application result is returned to the signaling request initiating device.

In an embodiment, the client serves as a signaling request initiating device.

It can be understood that the client, as the signaling request initiating device, sends a signaling request to a ticket request agent device. The signaling request includes a source address and a destination address of a service packet to be sent and carries a ticket application flag. Then, the client receives a ticket application result returned by the ticket request agent device according to the signaling request. The ticket application result includes a forwarding path and ticket information of each of the forwarding nodes in the forwarding path, so that the service packet carrying the ticket information is sent to the forwarding nodes according to the forwarding path.

In another embodiment, the access gateway serves as a signaling request initiating device.

It can be understood that if the client does not support the ticket function due to its own capabilities or other factors, the access gateway in the vicinity of the client may initiate a signaling request carrying a ticket application flag on the behalf of the client. The access gateway receives a signaling request from the client. The signaling request includes a source address and a destination address of a service packet to be sent. The access gateway incorporates a ticket application flag into the signaling request, and sends, as a signaling request initiating device, the signaling request carrying the ticket application flag to a ticket request agent device. Then, the access gateway receives a ticket application result returned by the ticket request agent device according to the signaling request. The ticket application result includes a forwarding path and ticket information of each of the forwarding nodes in the forwarding path. The ticket information is incorporated into a service packet to be subsequently sent by the client, and the service packet carrying the ticket information is sent to the forwarding nodes according to the forwarding path.

It can be understood that by using the access gateway in the vicinity of the client to initiate a signaling request carrying a ticket application flag, accept ticket information, and incorporate the ticket information into data packets to be sent subsequently, the requirements on the client can be lowered, thereby improve the compatibility and deployability with existing clients.

In some embodiments, the service access ticket request is configured to apply for an access ticket of a server in a domain different from the domain where the client is located. The ticket information is generated by a source ticket generation controller of the domain where the client is located and a destination domain ticket generation controller of the domain where the server is located, and the access verification is performed on the service packet by a source border router of the domain where the client is located and a destination border router of the domain where the server is located.

It can be understood that if the client accesses the server in the domain different from the domain where the client is located, the source ticket generation controller may receive a service access ticket request from a ticket request initiating device, determine the forwarding path according to a source address and a destination address included in the service access ticket request, generate pre-authorized first ticket information of the source border router, and send a ticket authorization request to the destination ticket generation controller, so that the destination ticket generation controller to forward the ticket authorization request to a service resource manager of the destination domain. The service resource manager of the destination domain determines an authorization result according to a source address and a destination address included in the ticket authorization request. Then, the destination ticket generation controller receives the authorization result returned by the service resource manager of the destination domain. When the authorization result indicates that authorization is allowed, a first ticket application result is sent to the source ticket generation controller. The first ticket application result includes pre-authorized second ticket information of the destination border router. The source ticket generation controller forwards a second ticket application result to the ticket request initiating device. The second ticket application result includes the first ticket information and the second ticket information.

In some embodiments, as shown in FIG. 5, an implementation environment of the access control method according to the embodiment of the present disclosure includes a ticket request agent device, through which the client is connected to the ticket generation controller, and the ticket request agent device may be configured to check an identity of the client and rationality of a service access application, forward the ticket application to the ticket generation controller, and return a ticket application result to the client.

In an embodiment, the ticket request agent device is a Domain Name System (DNS) server.

It can be understood that with the use of the DNS server as the ticket request agent device, the ticket application is implemented using a signaling channel of DNS queried by the client. Before performing a service access, the client requests the DNS server to parse a destination domain name, i.e., sends a DNS request carrying a ticket application flag to the DNS server. After receiving the DNS request, the DNS server parses the destination domain name included in the DNS request, and at the same time determines whether the client is accessing the server for the first time and whether the client has been authorized by the server. If the client is accessing the server for the first time and has not been authorized by the server, the DNS server constructs a service access ticket request and sends the service access ticket request to the ticket generation controller.

In an embodiment, the ticket request agent device is an Authentication, Authorization, Accounting (AAA) server.

It can be understood that with the use of the AAA server as the ticket request agent device, the ticket application is implemented using a signaling channel used by the client for identity authentication. Before performing a service access, the client requests the AAA server to perform identity authentication on the client, i.e., sends an authentication request carrying a ticket application flag to the AAA server. After receiving the authentication request, the AAA server performs identity authentication on the client, and at the same time determines whether the client is accessing the server for the first time and whether the client has been authorized by the server. If the client is accessing the server for the first time and has not been authorized by the server, the AAA server constructs a service access ticket request and sends the service access ticket request to the ticket generation controller.

In some embodiments, the ticket generation controller is a Software Defined Networking (SDN) controller.

It can be understood that if the implementation environment of the access control method according to the embodiment of the present disclosure is constructed based on an SDN architecture, the SDN controller, as the ticket generation controller, can acquire global network information and centrally manage network devices, thereby improving the efficiency and applicability of access control.

In some embodiments, the service access ticket request is configured to apply for an access ticket of a server in a domain different from the domain where the client is located, and the ticket generation controller is a DNS server.

It can be understood that if the client accesses the server in the domain different from the domain where the client is located, only a source border router in the domain where the client is located and a destination border router in the domain where the server is located are required to perform the access verification on a service packet from the client, i.e., only ticket information corresponding to the source border router and the destination border router is required to be generated. Therefore, with the use of the DNS server as the ticket generation controller, the ticket application can be implemented using a signaling channel of DNS queried by the client, and ticket information can be generated by the DNS server, such that the process of ticket application and authorization can be shortened, thereby improving the efficiency of access control.

In some embodiments, the service access ticket request is configured to apply for an access ticket of a server in a domain different from the domain where the client is located, and the ticket generation controller is an AAA server.

It can be understood that if the client accesses the server in the domain different from the domain where the client is located, only a source border router in the domain where the client is located and a destination border router in the domain where the server is located are required to perform the access verification on a service packet from the client, i.e., only ticket information corresponding to the source border router and the destination border router is required to be generated. Therefore, with the use of the AAA server as the ticket generation controller, the ticket application can be implemented using a signaling channel for identity authentication on the client, and ticket information can be generated by the AAA server, such that the process of ticket application and authorization can be shortened, thereby improving the efficiency of access control.

An embodiment of the present disclosure provides an access control method, performed by a service resource manager. FIG. 2 is a schematic flowchart of an access control method according to an embodiment of the present disclosure. As shown in FIG. 2, the access control method according to the embodiment of the present disclosure includes, but not limited to, following steps S210 to S230.

At the step S210, a ticket authorization request from a ticket generation controller is received.

At the step S220, an authorization result is determined according to a source address and a destination address included in the ticket authorization request.

At the step S230, the authorization result is returned to the ticket generation controller, such that the ticket generation controller to determine whether to send a ticket application result to the ticket request initiating device according to the authorization result. The ticket application result includes ticket information of each of at least one forwarding node in a forwarding path, and the ticket information is configured to be carried in a service packet sent by a client to a server.

It can be understood that in response to the ticket authorization request from the ticket generation controller, the authorization result is determined according to the source address and the destination address included in the ticket authorization request, i.e., it is determined whether to authorize the client corresponding to the source address to access the server corresponding to the destination address. The authorization result is returned to the ticket generation controller, such that the ticket generation controller to determine whether to send the ticket application result to the ticket request initiating device according to the authorization result. If the authorization result indicates that authorization is allowed, the ticket generation controller sends a ticket application result to the ticket request initiating device.

In some embodiments, the ticket authorization request further includes identity information of the client, and before the step S220, the access control method further includes a following step.

Access quality information uploaded by the server is received.

The step S220 includes the following steps.

The client is authenticated according to the source address included in the ticket authorization request and the identity information to determine a user trust level of the client.

Access quality of the server is determined according to the destination address included in the ticket authorization request and the access quality information.

The authorization result is determined based on the user trust level of the client and the access quality of the server.

The access quality information includes a server resource occupation status and a usage status of links adjacent to the server.

It should be noted that before it is determined according to the ticket authorization request whether to authorize the client to access the server, the service resource manager may receive and store the access quality information uploaded by the server, such that during determining of the authorization result, the access quality of the corresponding server can be determined according to the destination address included in the ticket authorization request.

It can be understood that the server resource occupation status includes a current usage status of the server, e.g., processor usage, memory usage, number of connections, etc.

In some embodiments, the access control method further includes a following step.

A ticket update request is sent to the ticket generation controller when a preset condition is satisfied, such that the ticket generation controller updates and synchronizes a ticket generation factor in the forwarding nodes according to the ticket update request.

The preset condition includes occurrence of a decrease in the user trust level of the client or in the access quality of the server.

It can be understood that by considering the access quality information of the server as one of authorization influencing factors, access to the server can be reduced in a timely manner when the resource occupation of the server is too high or an adjacent link is congested, thereby improving the current service quality of the server and alleviating the transmission burden of links adjacent to the server.

It can also be understood that by considering the user trust level of the client as one of the authorization influencing factors, a service access initiated by the client can be rejected in a timely manner to provide active defense against network attacks when the user trust level of the client decreases, thereby further improving the security of network services.

In some embodiments, the ticket application result is sent by the ticket generation controller to the client through a ticket agent device.

It can be understood that the client is connected to the ticket generation controller through the ticket request agent device, and the ticket request agent device may be configured to check an identity of the client and rationality of a service access application. On this basis, the ticket application result is sent by the ticket generation controller to the client through a ticket agent device.

An embodiment of the present disclosure provides an access control method, performed by a forwarding node. FIG. 3 is a schematic flowchart of an access control method according to an embodiment of the present disclosure. As shown in FIG. 3, the access control method according to the embodiment of the present disclosure includes, but not limited to, following steps S310 to S330.

At the step S310, a service packet from a client is received.

At the step S320, an access verification is performed on the service packet according to ticket information carried in the service packet.

At the step S330, the service packet is forwarded when the service packet passes the access verification.

In some embodiments, the access control method further includes a following step.

Node information is sent to a ticket generation controller, such that the ticket generation controller determines a forwarding path according to a source address and a destination address included in a service access ticket request and the node information.

The node information includes a node address, a node interface, and a node link state.

In some embodiments, the access control method further includes a following step.

A ticket generation factor from a ticket generation controller is received.

Additionally, performing the access verification on the service packet according to ticket information carried in the service packet includes
- generating ticket verification information according to the node information, the ticket generation factor, and a source address and a destination address carried in the service packet; and
- performing the access verification on the service packet according to the ticket verification information and the ticket information carried in the service packet.

An embodiment of the present disclosure provides an access control method, performed by a client. FIG. 4 is a schematic flowchart of an access control method according to an embodiment of the present disclosure. As shown in FIG. 4, the access control method according to the embodiment of the present disclosure includes, but not limited to, following steps S410 to S430.

At the step S410, the client, as a ticket request initiating device, sends a service access ticket request to a ticket generation controller. The service access ticket request includes a source address and a destination address of a service packet to be sent.

At the step S420, a ticket application result returned by the ticket generation controller according to the service access ticket request is received. The ticket application result includes a forwarding path and ticket information of each of at least one forwarding node in the forwarding path.

At the step S430, the service packet carrying the ticket information is sent to the forwarding node according to the forwarding path.

An embodiment of the present disclosure provides an access control method, performed by an access gateway, the method includes:
- receiving a service packet from a client;
- generating a service access ticket request when it is determined that the service packet requires applying for a ticket, where the service access ticket request includes a source address and a destination address of the service packet;
- sending, as a ticket request initiating device, the service access ticket request to a ticket generation controller;
- receiving a ticket application result returned by the ticket generation controller according to the service access ticket request, where the ticket application result includes a forwarding path and ticket information of each of at least one forwarding node in the forwarding path; and
- incorporating the ticket information into a service packet to be subsequently sent by the client, and sending the service packet carrying the ticket information to the forwarding node according to the forwarding path.

It should be understood that for the steps, process, effect, etc., of the access control method performed by an access gateway according to the embodiment of the present disclosure, reference may be made to the related descriptions in the access control method in the above embodiments, and the details will not be repeated herein.

An embodiment of the present disclosure provides an access control method, performed by a ticket request agent device, the method includes:
- receiving a signaling request from a signaling request initiating device;
- generating a service access ticket request according to a ticket application flag included in the signaling request, where the service access ticket request includes a source address and a destination address of a service packet to be sent;
- sending, as a ticket request initiating device, the service access ticket request to a ticket generation controller;
- receiving a ticket application result returned by the ticket generation controller according to the service access ticket request, where the ticket application result includes a forwarding path and ticket information of each of at least one forwarding node in the forwarding path; and
- returning the ticket application result to the signaling request initiating device.

It should be understood that for the steps, process, effect, etc., of the access control method performed by a ticket request agent device according to the embodiment of the present disclosure, reference may be made to the related descriptions in the access control method in the above embodiments, and the details will not be repeated herein.

An embodiment of the present disclosure provides an access control method, performed by a client, the method includes:
- sending, as a signaling request initiating device, a signaling request to a ticket request agent device, where the signaling request includes a source address and a destination address of a service packet to be sent and a ticket application flag;
- receiving a ticket application result returned by the ticket request agent device according to the signaling request, where the ticket application result includes a forwarding path and ticket information of each of at least one forwarding node in the forwarding path; and
- sending the service packet carrying the ticket information to the forwarding node according to the forwarding path.

It should be understood that for the steps, process, effect, etc., of the access control method performed by a client according to the embodiment of the present disclosure, reference may be made to the related descriptions in the access control method in the above embodiments, and the details will not be repeated herein.

An embodiment of the present disclosure provides an access control method, performed by an access gateway, the method includes:
- receiving a signaling request from a client, where the signaling request includes a source address and a destination address of a service packet to be sent;
- incorporating a ticket application flag to the signaling request, and sending, as a signaling request initiating device, the signaling request carrying the ticket application flag to a ticket request agent device;
- receiving a ticket application result returned by the ticket request agent device according to the signaling request, where the ticket application result includes a forwarding path and ticket information of each of at least one forwarding node in the forwarding path; and
- incorporating the ticket information to a service packet to be subsequently sent by the client, and sending the service packet carrying the ticket information to the forwarding node according to the forwarding path.

It should be understood that for the steps, process, effect, etc., of the access control method performed by an access gateway according to the embodiment of the present disclosure, reference may be made to the related descriptions in the access control method in the above embodiments, and the details will not be repeated herein.

The access control methods according to the embodiments of the present disclosure will be described below through some embodiments.

Firstly, pre-steps of the access control method are described.

At a step 001, after start-up, each of at least one forwarding node in the communication system uploads node information such as a node address, a node port, and a node link state to the ticket generation controller.

At a step 002, the ticket generation controller receives the node information uploaded by each of the at least one forwarding node, and delivers a preset ticket generation factor to each of the at least one forwarding node.

At a step 003, the server uploads access quality information such as a server resource occupation status and a usage status of links adjacent to the server to the service resource manager of the domain where the server is located.

### Example Embodiment One

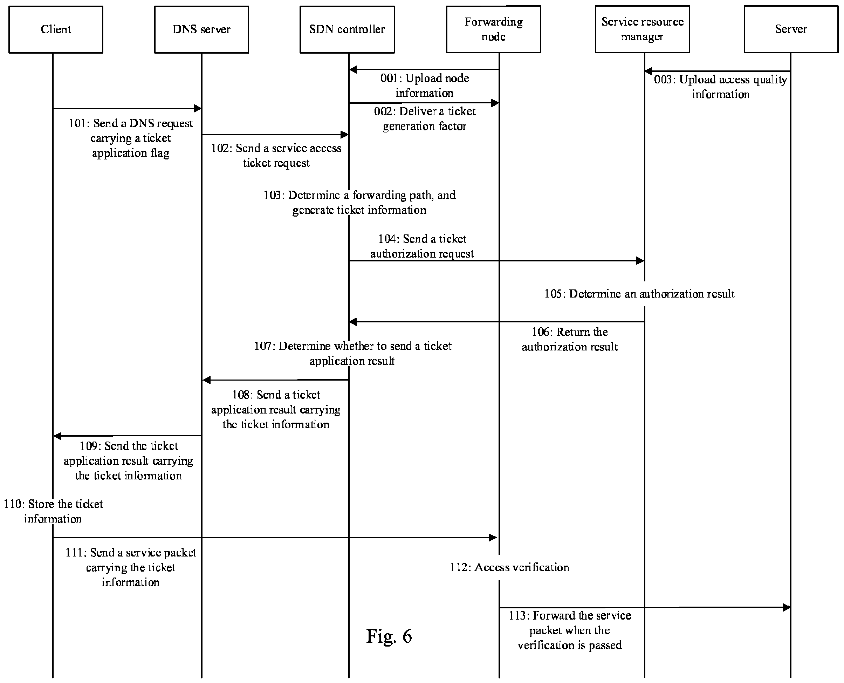

FIG. 6 is a schematic flowchart of an access control method according to an embodiment of the present disclosure. A DNS server serves as a ticket application agent device, and an SDN controller serves as a ticket generation controller. The access control method includes following steps.

At a step 101, before performing a service access, the client sends a DNS request carrying a ticket application flag to the DNS server.

At a step 102, the DNS server receives the DNS request, determines whether the DNS request requires applying for a ticket. If so, a service access ticket request is sent to the SDN controller.

At a step 103, the SDN controller receives the service access ticket request, determines a forwarding path, and generates ticket information.

At a step 104, the SDN controller sends a ticket authorization request to the service resource manager.

At a step 105, the service resource manager receives the ticket authorization request and determines an authorization result.

At a step 106, the service resource manager returns the authorization result to the SDN controller.

At a step 107, the SDN controller receives the authorization result, and determines whether to send a ticket application result according to the authorization result.

At a step 108, when the authorization result indicates that authorization is allowed, the SDN controller sends a ticket application result carrying the ticket information to the DNS server.

At a step 109, the DNS server sends a domain name parse and the ticket application result to the client.

At a step 110, the client receives the ticket application result and stores the ticket information.

At a step 111, the client sends a service packet carrying the ticket information to the forwarding node.

At a step 112, the forwarding node receives the service packet, and performs the access verification on the service packet according to the ticket information carried in the service packet.

At a step 113, when the service packet passes the verification, the forwarding node forwards the service packet.

### Example Embodiment Two

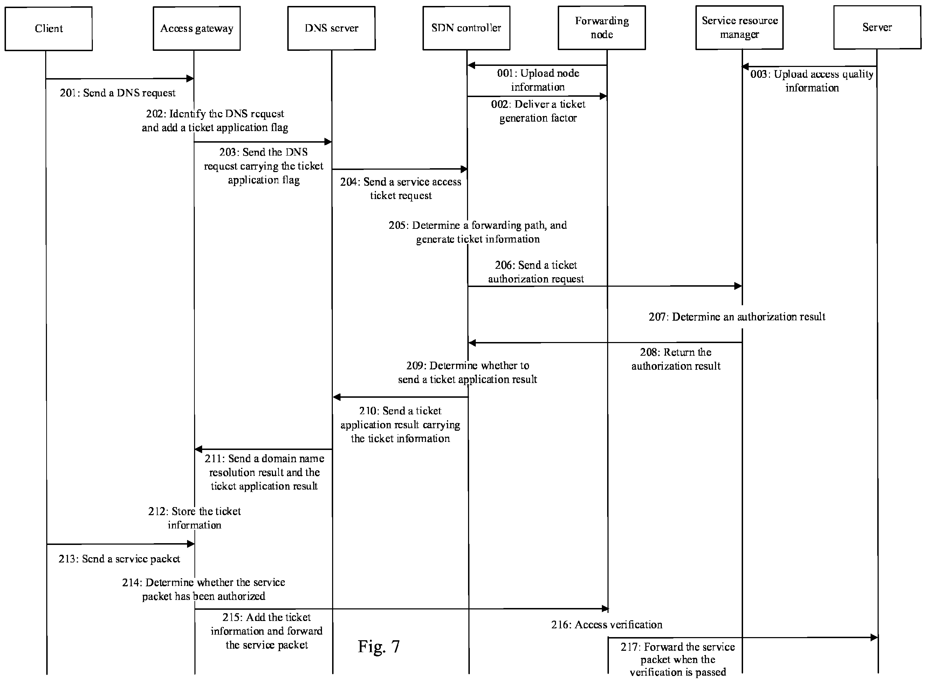

FIG. 7 is a schematic flowchart of an access control method according to an embodiment of the present disclosure. A DNS server serves as a ticket application agent device, and an SDN controller serves as a ticket generation controller. The access control method includes following steps.

At a step 201, before performing a service access, the client sends a DNS request to the DNS server.

At a step 202, the access gateway identifies the DNS request, and incorporates a ticket application flag into the DNS request.

At a step 203, the access gateway sends the DNS request carrying the ticket application flag to the DNS server.

At a step 204, the DNS server receives the DNS request, determines whether the DNS request requires applying for a ticket. If so, a service access ticket request is sent to the SDN controller.

At a step 205, the SDN controller receives the service access ticket request, determines a forwarding path, and generates ticket information.

At a step 206, the SDN controller sends a ticket authorization request to the service resource manager.

At a step 207, the service resource manager receives the ticket authorization request and determines an authorization result.

At a step 208, the service resource manager returns the authorization result to the SDN controller.

At a step 209, the SDN controller receives the authorization result, and determines according to the authorization result whether to send a ticket application result.

At a step 210, when the authorization result indicates that authorization is allowed, the SDN controller sends a ticket application result carrying the ticket information to the DNS server.

At a step 211, the DNS server sends a domain name parse and the ticket application result to the access gateway.

At a step 212, the access gateway receives the ticket application result, stores the ticket information, and forwards the domain name parse to the client.

At a step 213, the client sends a service packet to the access gateway.

At a step 214, the access gateway receives the service packet and determines whether the service packet has been authorized.

At a step 215, if the service packet has been authorized, the ticket information is incorporated into the service packet, and the service packet is forwards.

At a step 216, the forwarding node receives the service packet, and performs the access verification on the service packet according to the ticket information carried in the service packet.

At a step 217, when the service packet passes the verification, the forwarding node forwards the service packet.

### Example Embodiment Three

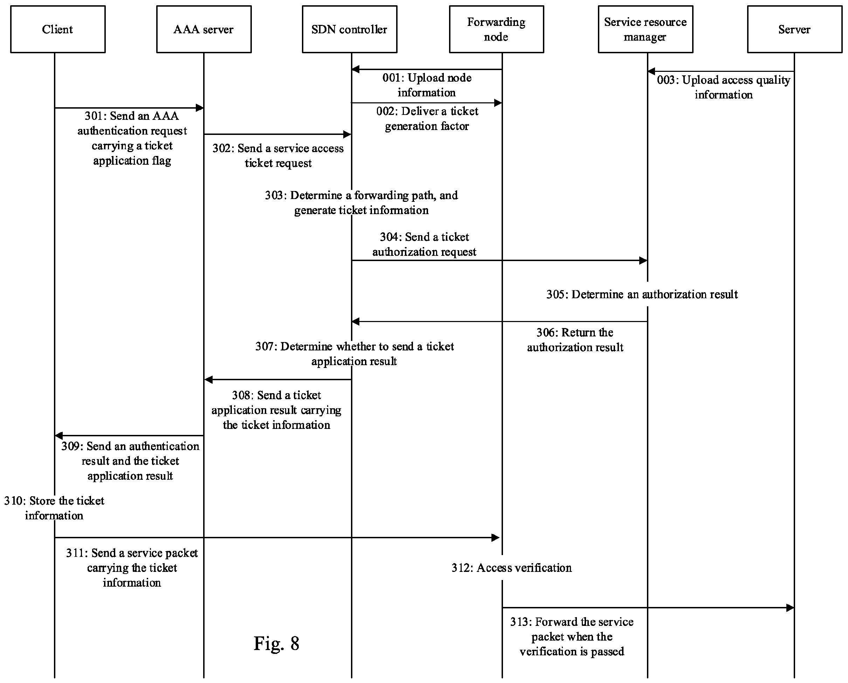

FIG. 8 is a schematic flowchart of an access control method according to an embodiment of the present disclosure. An AAA server serves as a ticket application agent device, and an SDN controller serves as a ticket generation controller. The access control method includes following steps.

At a step 301, before performing a service access, the client sends an AAA authentication request carrying a ticket application flag to the AAA server.

At a step 302, the AAA server receives the AAA authentication request, determines whether to require applying for a ticket. If so, a service access ticket request is sent to the SDN controller.

At a step 303, the SDN controller receives the service access ticket request, determines a forwarding path, and generates ticket information.

At a step 304, the SDN controller sends a ticket authorization request to the service resource manager.

At a step 305, the service resource manager receives the ticket authorization request and determines an authorization result.

At a step 306, the service resource manager returns the authorization result to the SDN controller.

At a step 307, the SDN controller receives the authorization result, and determines according to the authorization result whether to send a ticket application result.

At a step 308, when the authorization result indicates that authorization is allowed, the SDN controller sends a ticket application result carrying the ticket information to the AAA server.

At a step 309, the AAA server sends an authentication result and the ticket application result to the client.

At a step 310, the client receives the ticket application result and stores the ticket information.

At a step 311, the client sends a service packet carrying the ticket information to the forwarding node.

At a step 312, the forwarding node receives the service packet, and performs the access verification on the service packet according to the ticket information carried in the service packet.

At a step 313, when the service packet passes the verification, the forwarding node forwards the service packet.

### Example Embodiment Four

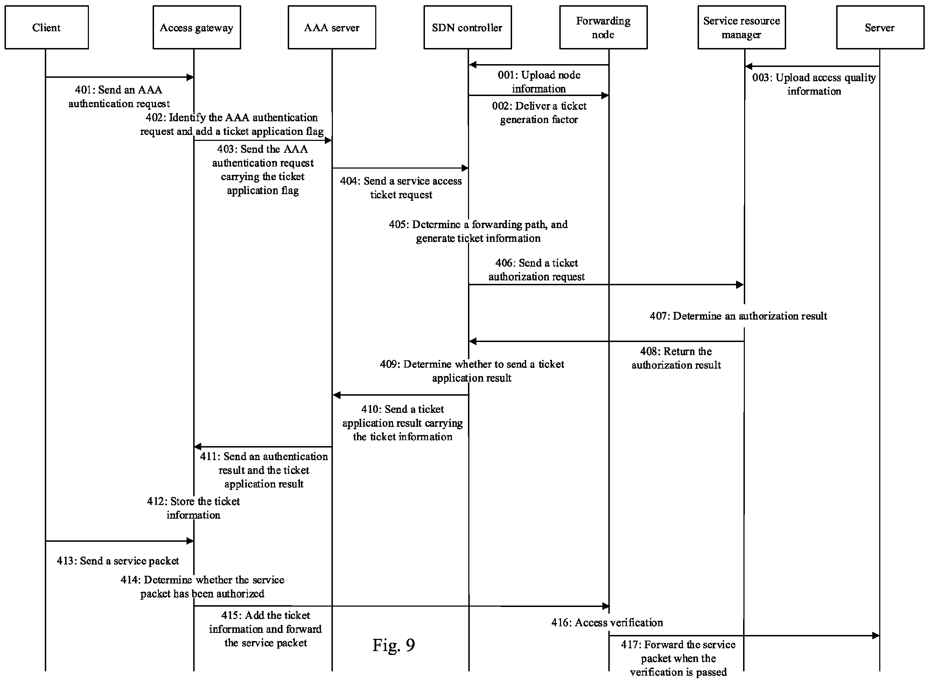

FIG. 9 is a schematic flowchart of an access control method according to an embodiment of the present disclosure. An AAA server serves as a ticket application agent device, and an SDN controller serves as a ticket generation controller. The access control method includes following steps.

At a step 401, before performing a service access, the client sends an AAA authentication request to the AAA server.

At a step 402, the access gateway identifies the AAA authentication request, and incorporates a ticket application flag into the AAA authentication request.

At a step 403, the access gateway sends the AAA authentication request to the AAA server.

At a step 404, the AAA server receives the AAA authentication request, determines whether to require applying for a ticket. If so, a service access ticket request is sent to the SDN controller.

At a step 405, the SDN controller receives the service access ticket request, determines a forwarding path, and generates ticket information.

At a step 406, the SDN controller sends a ticket authorization request to the service resource manager.

At a step 407, the service resource manager receives the ticket authorization request and determines an authorization result.

At a step 408, the service resource manager returns the authorization result to the SDN controller.

At a step 409, the SDN controller receives the authorization result, and determines according to the authorization result whether to send a ticket application result.

At a step 410, when the authorization result indicates that authorization is allowed, the SDN controller sends a ticket application result carrying the ticket information to the AAA server.

At a step 411, the AAA server sends an authentication result and the ticket application result to the access gateway.

At a step 412, the access gateway receives the ticket application result, stores the ticket information, and forwards the authentication result to the client.

At a step 413, the client sends a service packet to the access gateway.

At a step 414, the access gateway receives the service packet and determines whether the service packet has been authorized.

At a step 415, if the service packet has been authorized, the ticket information is incorporated into the service packet and forwards the service packet carrying the ticket information.

At a step 416, the forwarding node receives the service packet, and performs the access verification on the service packet according to the ticket information carried in the service packet.

At a step 417, when the service packet passes the verification, the forwarding node forwards the service packet.

### Example Embodiment Five

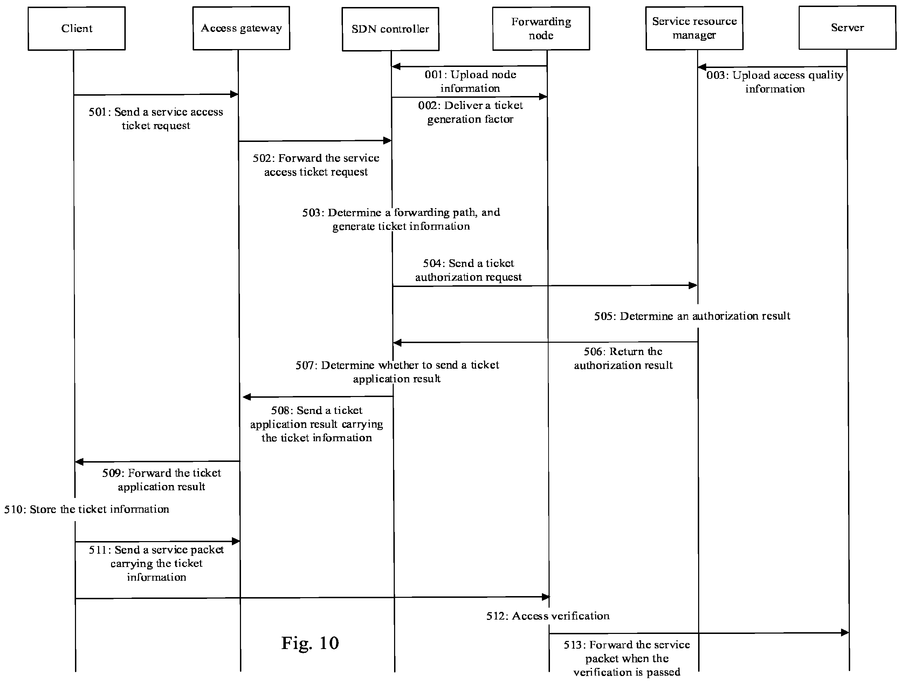

FIG. 10 is a schematic flowchart of an access control method according to an embodiment of the present disclosure. An SDN controller serves as a ticket generation controller. The access control method includes following steps.

At a step 501, before performing a service access, the client sends a service access ticket request.

At a step 502, the access gateway identifies the service access ticket request, and forwards the service access ticket request to the SDN controller.

At a step 503, the SDN controller receives the service access ticket request, determines a forwarding path, and generates ticket information.

At a step 504, the SDN controller sends a ticket authorization request to the service resource manager.

At a step 505, the service resource manager receives the ticket authorization request and determines an authorization result.

At a step 506, the service resource manager returns the authorization result to the SDN controller.

At a step 507, the SDN controller receives the authorization result, and determines whether to send a ticket application result according to the authorization result.

At a step 508, when the authorization result indicates that authorization is allowed, the SDN controller sends a ticket application result carrying the ticket information to the access gateway.

At a step 509, the access gateway forwards the ticket application result to the client.

At a step 510, the client receives the ticket application result and stores the ticket information.

At a step 511, the client sends a service packet carrying the ticket information to the forwarding node.

At a step 512, the forwarding node receives the service packet, and performs the access verification on the service packet according to the ticket information carried in the service packet.

At a step 513, when the service packet passes the verification, the forwarding node forwards the service packet.

### Example Embodiment Six

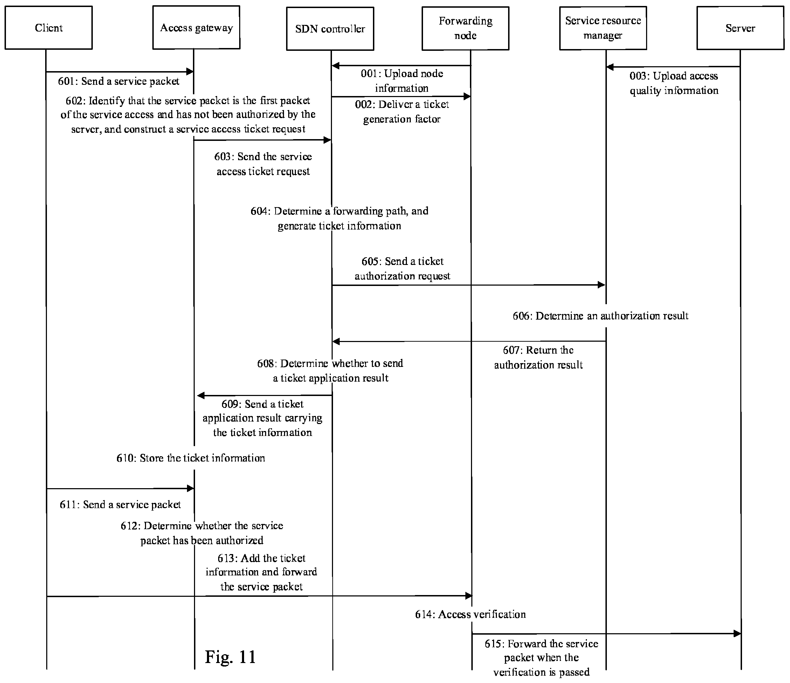

FIG. 11 is a schematic flowchart of an access control method according to an embodiment of the present disclosure. An SDN controller serves as a ticket generation controller. The access control method includes following steps.

At a step 601, the client sends a service packet to initiate a service access.

At a step 602, the access gateway identifies that the service packet is a first packet of the service access and has not been authorized by the service resource manager, and constructs a service access ticket request.

At a step 603, the access gateway sends the service access ticket request to the SDN controller.

At a step 604, the SDN controller receives the service access ticket request, determines a forwarding path, and generates ticket information.

At a step 605, the SDN controller sends a ticket authorization request to the service resource manager.

At a step 606, the service resource manager receives the ticket authorization request and determines an authorization result.

At a step 607, the service resource manager returns the authorization result to the SDN controller.

At a step 608, the SDN controller receives the authorization result, and determines whether to send a ticket application result according to the authorization result.

At a step 609, when the authorization result indicates that authorization is allowed, the SDN controller sends a ticket application result carrying the ticket information to the access gateway.

At a step 610, the access gateway receives the ticket application result and stores the ticket information.

At a step 611, the client sends a service packet to the access gateway.

At a step 612, the access gateway receives the service packet and determines whether the service packet has been authorized.

At a step 613, if the service packet has been authorized, the ticket information is incorporated into the service packet, and then the service packet is forwarded.

At a step 614, the forwarding node receives the service packet, and performs the access verification on the service packet according to the ticket information carried in the service packet.

At a step 615, when the service packet passes the verification, the forwarding node forwards the service packet.

### Example Embodiment Seven

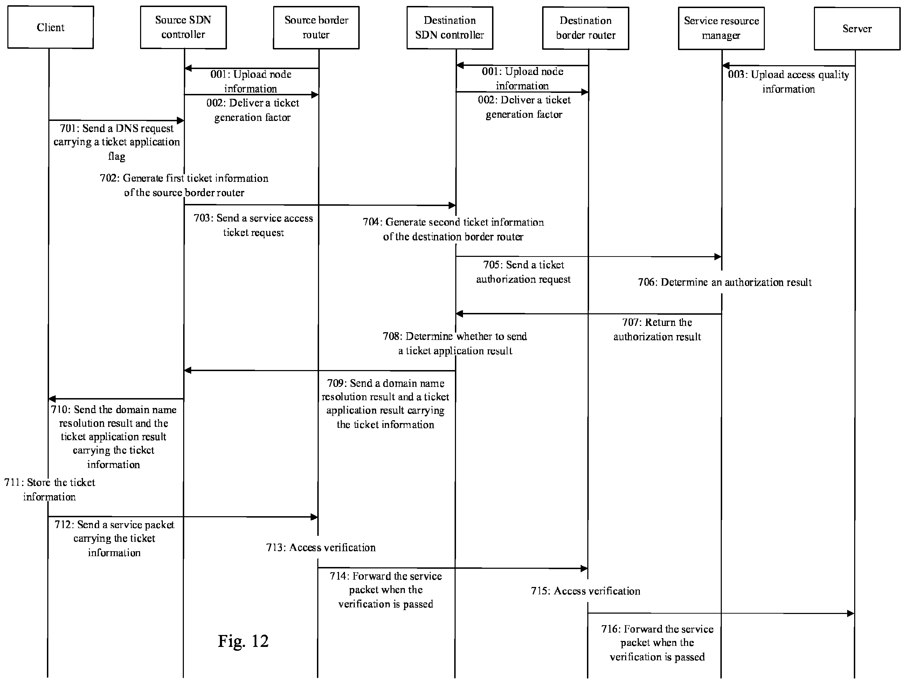

FIG. 12 is a schematic flowchart of an access control method according to an embodiment of the present disclosure. A destination DNS server serves as a ticket generation controller, and a source DNS server serves as a ticket request agent device. Forwarding nodes include a source border router and a destination border router. The access control method includes following steps.

At a step 701, before performing a service access, the client sends a DNS request carrying a ticket application flag to the source DNS server.

At a step 702, the source DNS server receives the DNS request, determines whether to require applying for a ticket. If so, first ticket information of the source border router is generated.

At a step 703, the source DNS server sends a service access ticket request to the destination DNS server.

At a step 704, the destination DNS server receives the service access ticket request and generates second ticket information of the destination border router.

At a step 705, the destination DNS server sends a ticket authorization request to the service resource manager.

At a step 706, the service resource manager receives the ticket authorization request and determines an authorization result.

At a step 707, the service resource manager returns the authorization result to the destination DNS server.

At a step 708, the destination DNS server receives the authorization result, and determines whether to send a ticket application result according to the authorization result.

At a step 709, when the authorization result indicates that authorization is allowed, the destination DNS server sends a domain name parse and a ticket application result carrying the ticket information to the source DNS server.

At a step 710, the source DNS server sends the domain name parse and the ticket application result to the client.

At a step 711, the client receives the domain name parse and the ticket application result, and stores the ticket information.

At a step 712, the client sends a service packet carrying the ticket information to the server.

At a step 713, the source border router receives the service packet, and performs the access verification on the service packet according to the ticket information carried in the service packet.

At a step 714, when the service packet passes the verification, the source border router forwards the service packet to the destination border router.

At a step 715, the destination border router receives the service packet, and performs the access verification on the service packet according to the ticket information carried in the service packet.

At a step 716, when the service packet passes the verification, the destination border router forwards the service packet to the server.

### Example Embodiment Eight

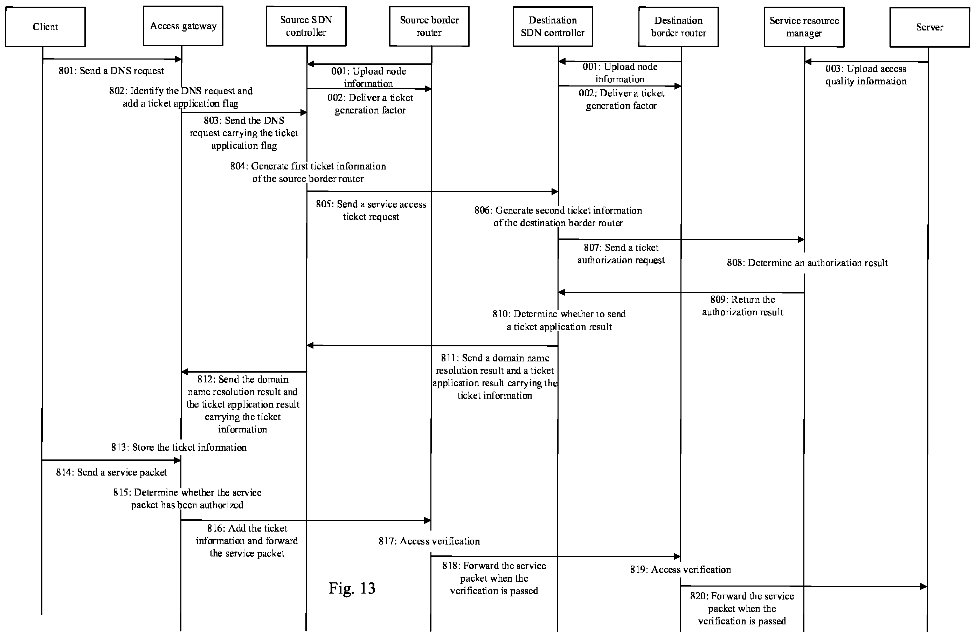

FIG. 13 is a schematic flowchart of an access control method according to an embodiment of the present disclosure. A destination DNS server serves as a ticket generation controller, and a source DNS server serves as a ticket request agent device. Forwarding nodes include a source border router and a destination border router. The access control method includes following steps.

At a step 801, before performing a service access, the client sends a DNS request to the source DNS server.

At a step 802, the access gateway identifies the DNS request, and incorporates a ticket application flag into the DNS request.

At a step 803, the access gateway sends the DNS request carrying the ticket application flag to the source DNS server.

At a step 804, the source DNS server receives the DNS request, determines whether to require applying for a ticket. If so, first ticket information of the source border router is generated.

At a step 805, the source DNS server sends a service access ticket request to the destination DNS server.

At a step 806, the destination DNS server receives the service access ticket request and generates second ticket information of the destination border router.

At a step 807, the destination DNS server sends a ticket authorization request to the service resource manager.

At a step 808, the service resource manager receives the ticket authorization request and determines an authorization result.

At a step 809, the service resource manager returns the authorization result to the destination DNS server.

At a step 810, the destination DNS server receives the authorization result, and determines whether to send a ticket application result according to the authorization result.

At a step 811, when the authorization result indicates that authorization is allowed, the destination DNS server sends a domain name parse and a ticket application result carrying the ticket information to the source DNS server.

At a step 812, the source DNS server sends the domain name parse and the ticket application result to the access gateway.

At a step 813, the access gateway receives the domain name parse and the ticket application result, and stores the ticket information.

At a step 814, the client sends a service packet to the access gateway.

At a step 815, the access gateway receives the service packet and determines whether the service packet has been authorized.

At a step 816, if the service packet has been authorized, the ticket information is incorporated into the service packet and the service packet is forwarded.

At a step 817, the source border router receives the service packet, and performs the access verification on the service packet according to the ticket information carried in the service packet.

At a step 818, when the service packet passes the verification, the source border router forwards the service packet to the destination border router.

At a step 819, the destination border router receives the service packet, and performs the access verification on the service packet according to the ticket information carried in the service packet.

At a step 820, when the service packet passes the verification, the destination border router forwards the service packet to the server.

### Example Embodiment Nine

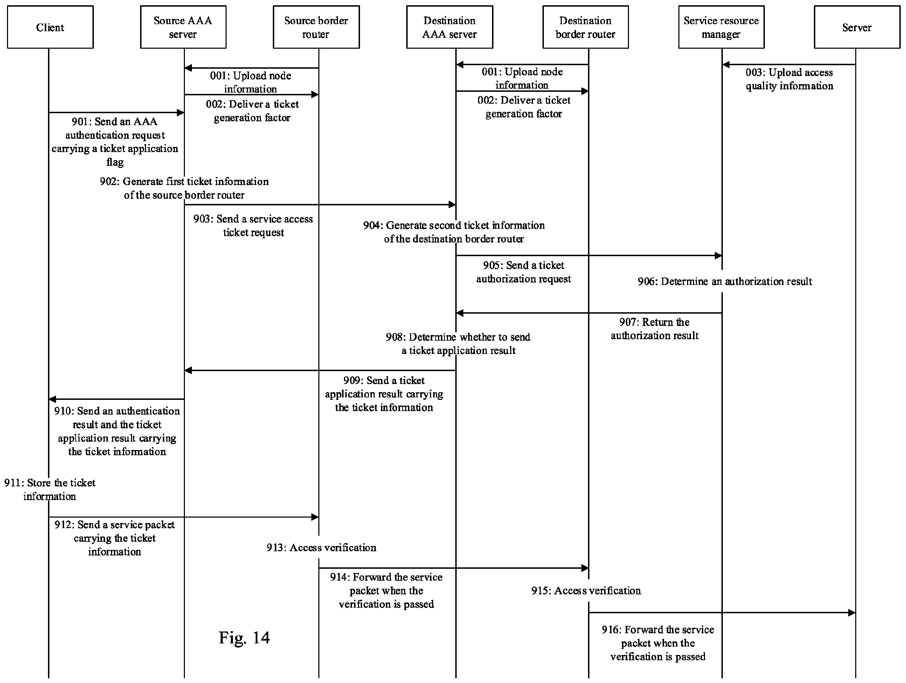

FIG. 14 is a schematic flowchart of an access control method according to an embodiment of the present disclosure. A destination AAA server serves as a ticket generation controller, and a source AAA server serves as a ticket request agent device. Forwarding nodes include a source border router and a destination border router. The access control method includes following steps.

At a step 901, before performing a service access, the client sends an AAA authentication request carrying a ticket application flag to the source AAA server.

At a step 902, the source AAA server receives the AAA authentication request, determines whether to require applying for a ticket. If so, first ticket information of the source border router is generated.

At a step 903, the source AAA server sends a service access ticket request to the destination AAA server.

At a step 904, the destination AAA server receives the service access ticket request and generates second ticket information of the destination border router.

At a step 905, the destination AAA server sends a ticket authorization request to the service resource manager.

At a step 906, the service resource manager receives the ticket authorization request and determines an authorization result.

At a step 907, the service resource manager returns the authorization result to the destination AAA server.

At a step 908, the destination AAA server receives the authorization result, and determines whether to send a ticket application result according to the authorization result.

At a step 909, when the authorization result indicates that authorization is allowed, the destination AAA server sends a ticket application result carrying the ticket information to the source AAA server.

At a step 910, the source AAA server sends an authentication result and the ticket application result to the client.

At a step 911, the client receives the authentication result and the ticket application result, and stores the ticket information.

At a step 912, the client sends a service packet carrying the ticket information to the server.

At a step 913, the source border router receives the service packet, and performs the access verification on the service packet according to the ticket information carried in the service packet.

At a step 914, when the service packet passes the verification, the source border router forwards the service packet to the destination border router.

At a step 915, the destination border router receives the service packet, and performs the access verification on the service packet according to the ticket information carried in the service packet.

At a step 916, when the service packet passes the verification, the destination border router forwards the service packet to the server.

### Example Embodiment Ten

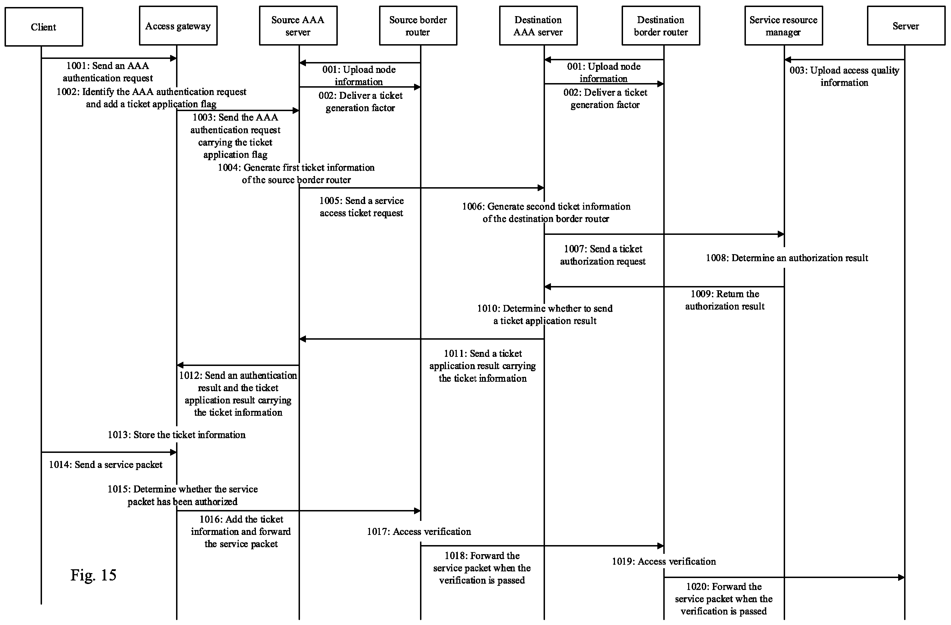

FIG. 15 is a schematic flowchart of an access control method according to an embodiment of the present disclosure. A destination AAA server serves as a ticket generation controller, and a source AAA server serves as a ticket request agent device. Forwarding nodes include a source border router and a destination border router. The access control method includes following steps.

At a step 1001, before performing a service access, the client sends an AAA authentication request to the source AAA server.

At a step 1002, the access gateway identifies the AAA authentication request and incorporates a ticket application flag into the AAA authentication request.

At a step 1003, the access gateway sends the AAA authentication request to the source AAA server.

At a step 1004, the source AAA server receives the AAA authentication request, determines whether to require applying for a ticket. If so, first ticket information of the source border router is generated.

At a step 1005, the source AAA server sends a service access ticket request to the destination AAA server.

At a step 1006, the destination AAA server receives the service access ticket request and generates second ticket information of the destination border router.

At a step 1007, the destination AAA server sends a ticket authorization request to the service resource manager.

At a step 1008, the service resource manager receives the ticket authorization request and determines an authorization result.

At a step 1009, the service resource manager returns the authorization result to the destination AAA server.

At a step 1010, the destination AAA server receives the authorization result, and determines whether to send a ticket application result according to the authorization result.

At a step 1011, when the authorization result indicates that authorization is allowed, the destination AAA server sends a domain name parse and a ticket application result carrying the ticket information to the source AAA server.

At a step 1012, the source AAA server sends an authentication result and the ticket application result to the access gateway.

At a step 1013, the access gateway receives the authentication result and the ticket application result, and stores the ticket information.

At a step 1014, the client sends a service packet to the access gateway.

At a step 1015, the access gateway receives the service packet and determines whether the service packet has been authorized.

At a step 1016, if the service packet has been authorized, the ticket information is incorporated into the service packet and the service packet is forwarded.

At a step 1017, the source border router receives the service packet, and performs the access verification on the service packet according to the ticket information carried in the service packet.

At a step 1018, when the service packet passes the verification, the source border router forwards the service packet to the destination border router.

At a step 1019, the destination border router receives the service packet, and performs the access verification on the service packet according to the ticket information carried in the service packet.

At a step 1020, when the service packet passes the verification, the destination border router forwards the service packet to the server.

It should be noted that in the above embodiments, the description in each embodiment has its own focus. For parts that are not detailed or set forth in one embodiment, reference may be made to the relevant descriptions in other embodiments.

In the embodiments of the present disclosure, a service access ticket request from a ticket request initiating device is received, and a forwarding path for sending a packet between a client and a server is determined according to a source address and a destination address included in the service access ticket request. When a service resource manager determines to authorize this service access, the service resource manager sends a ticket application result including ticket information of each of the forwarding nodes in the forwarding path to the ticket request initiating device, such that the client can perform the service access by using a service packet carrying the ticket information. In the embodiments of the present disclosure, by authorizing a client that legitimately accesses a service and performing the access verification on a service packet from the client in a forwarding path, malicious injection of network attack traffic can be prevented, and active defense against network attacks can be realized to improve the security of network services.

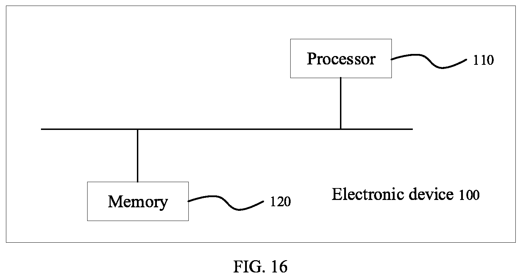

FIG. 16 shows an electronic device 100 according to an embodiment of the present disclosure. As shown in FIG. 16, the electronic device 100 includes, but not limited to:
- a memory 120, configured for storing a program; and
- a processor 110, configured for executing the program stored in the memory 120, where the program stored in the memory 120, when executed by the processor 110, causes the processor 110 to implement the access control method described above.

The processor 110 and the memory 120 may be connected by a bus or in other ways.

The memory 120, as a non-transitory computer-readable storage medium, may be configured for storing a non-transitory software program and a non-transitory computer-executable program, for example, the access control method described in any one of the embodiments of the present disclosure. The processor 110 runs the non-transitory software program and the non-transitory computer-executable program stored in the memory 120, to implement the access control method described above.

The memory 120 may include a program storage area and a data storage area. The program storage area may store an operating system, and an application required by at least one function. The data storage area may store data and the like required for executing the access control method described above. In addition, the memory 120 may include a high-speed random access memory, and may also include a non-transitory memory, e.g., at least one magnetic disk storage device, flash memory device, or other non-transitory solid-state storage device. In some implementations, the memory 120 may include a memory located remotely from the processor 110, and the remote memory may be connected to the processor 110 via a network. Examples of the network include, but not limited to, the Internet, an intranet, a local area network, a mobile communication network, and combinations thereof.

The non-transitory software program and instructions required to implement the access control method are stored in the memory 120 which, when executed by one or more processors 110, causes the one or more processors 110 to implement the access control method according to any one of the embodiments of the present disclosure.

An embodiment of the present disclosure provides a storage medium, storing a computer-executable instruction which, when executed by a processor, causes the processor to implement the access control method.

In an embodiment, the storage medium stores a computer-executable instruction which, when executed by one or more control processors, for example, by one or more processors in the foregoing electronic device, may cause the one or more processors to implement the access control method according to any one of the embodiments of the present disclosure.

In the embodiments of the present disclosure, a service access ticket request from a ticket request initiating device is received, and a forwarding path for sending a packet between a client and a server is determined according to a source address and a destination address included in the service access ticket request. When a service resource manager determines to authorize this service access, the service resource manager sends a ticket application result including ticket information of each of the forwarding nodes in the forwarding path to the ticket request initiating device, such that the client can perform the service access by using a service packet carrying the ticket information. In the embodiments of the present disclosure, by authorizing a client that legitimately accesses a service and performing access verification on a service packet from the client in a forwarding path, malicious injection of network attack traffic can be prevented, and active defense against network attacks can be realized to improve the security of network services.

The embodiments described above are merely examples. The units described as separate components may or may not be physically separated, i.e., they may be located in one place or may be distributed over a plurality of network units. Some or all of the modules may be selected according to actual needs to achieve the objects of the scheme of this embodiment.

In addition, functional units in the embodiments of the present disclosure may be integrated into one processing unit, or each of the units may exist alone physically, or two or more units may be integrated into one unit. The integrated unit may be implemented in the form of hardware, or may be implemented in the form of a combination of hardware and a software functional unit.

Those having ordinary skills in the art can understand that all or some of the steps in the methods disclosed above and the functional modules/units in the system and the apparatus can be implemented as software, firmware, hardware, and appropriate combinations thereof. Some or all physical components may be implemented as software executed by a processor, such as a central processing unit, a digital signal processor, or a microprocessor, or as hardware, or as an integrated circuit, such as an application-specific integrated circuit. Such software may be distributed on a computer-readable medium, which may include a computer storage medium (or non-transitory medium) and a communication medium (or transitory medium). As well known to those having ordinary skills in the art, the term "computer storage medium" includes volatile and nonvolatile, removable and non-removable media implemented in any method or technology for storage of information (such as computer-readable instructions, data structures, program modules, or other data). The computer storage medium includes, but not limited to, a Random Access Memory (RAM), a Read-Only Memory (ROM), an electrically erasable programmable Read-Only Memory (EEPROM), a flash memory or other memory technology, a compact disc Read-Only Memory (CD-ROM), a Digital Versatile Disc (DVD) or other optical storage, a cassette, a magnetic tape, a magnetic disk storage or other magnetic storage device, or any other medium which can be used to store the desired information and can be accessed by a computer. In addition, as is known to those having ordinary skills in the art, the communication medium typically includes computer-readable instructions, data structures, program modules, or other data in a modulated data signal such as a carrier or other transport mechanism, and can include any information delivery medium.

## Claims

1. An access control method, performed by a ticket generation controller, the method comprising:
receiving a service access ticket request from a ticket request initiating device;
determining a forwarding path according to a source address and a destination address which are both comprised in the service access ticket request;
sending a ticket authorization request to a service resource manager, such that the service resource manager to determine an authorization result according to the source address and the destination address which are both comprised in the ticket authorization request;
receiving the authorization result returned by the service resource manager; and
sending a ticket application result to the ticket request initiating device in response to the authorization result indicating that authorization is allowed, wherein the ticket application result comprises ticket information of each of at least one forwarding node in the forwarding path, and the ticket information is carried in a service packet sent by a client to a server.

2. The access control method of claim 1, wherein before receiving a service access ticket request from a ticket request initiating device, the method further comprises:
receiving node information from the at least one forwarding node; and
after determining a forwarding path according to a source address and a destination address which are both comprised in the service access ticket request and before sending a ticket application result to the ticket request initiating device, the method further comprises:
generating ticket information of each of the at least one forwarding node in the forwarding path according to the node information, a preset ticket generation factor, and the source address and the destination address which are both comprised in the service access ticket request,
wherein the node information comprises a node address, a node interface, a node link state, and whether a ticket function is supported.

3. The access control method of claim 2, wherein before receiving a service access ticket request from a ticket request initiating device, the method further comprises:
sending the ticket generation factor to the at least one forwarding node, wherein the ticket generation factor is configured to generate ticket verification information for an access verification performed on the ticket information carried in the service packet sent by the client to the server.

4. The access control method of claim 3, wherein after sending the ticket generation factor to the forwarding node, the method further comprises:
receiving a ticket update request from the service resource manager; and
updating and synchronizing the ticket generation factor in the at least one forwarding node according to the ticket update request.

5. An access control method, performed by a service resource manager, the method comprising:
receiving a ticket authorization request from a ticket generation controller;
determining an authorization result according to a source address and a destination address which are both comprised in the ticket authorization request; and
returning the authorization result to the ticket generation controller, such that the ticket generation controller to determine whether to send a ticket application result to a ticket request initiating device according to the authorization result, wherein the ticket application result comprises ticket information of each of at least one forwarding node in a forwarding path, and the ticket information is carried in a service packet sent by a client to a server.

6. The access control method of claim 5, wherein the ticket authorization request further comprises identity information of the client, and before determining an authorization result according to a source address and a destination address which are both comprised in the ticket authorization request, the method further comprises:
receiving access quality information uploaded by the server; and
determining an authorization result according to a source address and a destination address which are both comprised in the ticket authorization request comprises:
authenticating the client according to the source address comprised in the ticket authorization request and the identity information to determine a user trust level of the client;
determining access quality of the server according to the destination address comprised in the ticket authorization request and the access quality information; and
determining the authorization result based on the user trust level of the client and the access quality of the server.

7. The access control method of claim 6, wherein the method further comprises:
sending a ticket update request to the ticket generation controller in response to a preset condition being satisfied, such that the ticket generation controller to update and synchronize a ticket generation factor in the at least one forwarding node according to the ticket update request,
wherein the preset condition comprises occurrence of a decrease in the user trust level of the client or in the access quality of the server.

8. An access control method, performed by a forwarding node, the method comprising:
receiving a service packet from a client;
performing an access verification on the service packet according to ticket information carried in the service packet; and
forwarding the service packet in response to the service packet passing the access verification.

9. The access control method of claim 8, wherein the method further comprises:
sending node information to a ticket generation controller,
wherein the node information comprises a node address, a node interface, a node link state, and whether a ticket function is supported.

10. The access control method of claim 8, wherein the method further comprises:
receiving a ticket generation factor from a ticket generation controller; and
performing an access verification on the service packet according to ticket information carried in the service packet comprises:
generating ticket verification information according to the node information, the ticket generation factor, and a source address and a destination address which are both carried in the service packet; and
performing the access verification on the service packet according to the ticket verification information and the ticket information carried in the service packet.

11. An access control method, performed by a client, the method comprising:
sending, as a ticket request initiating device, a service access ticket request to a ticket generation controller, wherein the service access ticket request comprises a source address and a destination address of a service packet to be sent;
receiving a ticket application result returned by the ticket generation controller according to the service access ticket request, wherein the ticket application result comprises a forwarding path and ticket information of each of at least one forwarding node in the forwarding path; and
sending the service packet carrying the ticket information to the at least one forwarding node according to the forwarding path.

12. An access control method, performed by an access gateway, the method comprising:
receiving a service packet from a client;
generating a service access ticket request in response to determining that the service packet requires applying for a ticket, wherein the service access ticket request comprises a source address and a destination address of the service packet;
sending, as a ticket request initiating device, the service access ticket request to a ticket generation controller;
receiving a ticket application result returned by the ticket generation controller according to the service access ticket request, wherein the ticket application result comprises a forwarding path and ticket information of each of at least one forwarding node in the forwarding path; and
incorporating the ticket information into the service packet to be subsequently sent by the client, and sending the service packet carrying the ticket information to the at least one forwarding node according to the forwarding path.

13. An access control method, performed by a ticket request agent device, the method comprising:
receiving a signaling request from a signaling request initiating device;
generating a service access ticket request according to a ticket application flag comprised in the signaling request, wherein the service access ticket request comprises a source address and a destination address of a service packet to be sent;
sending, as a ticket request initiating device, the service access ticket request to a ticket generation controller;
receiving a ticket application result returned by the ticket generation controller according to the service access ticket request, wherein the ticket application result comprises a forwarding path and ticket information of each of at least one forwarding node in the forwarding path; and
returning the ticket application result to the signaling request initiating device.

14. An access control method, performed by a client, the method comprising:
sending, as a signaling request initiating device, a signaling request to a ticket request agent device, wherein the signaling request comprises a source address and a destination address of a service packet to be sent and a ticket application flag;
receiving a ticket application result returned by the ticket request agent device according to the signaling request, wherein the ticket application result comprises a forwarding path and ticket information of each of at least one forwarding node in the forwarding path; and
sending the service packet carrying the ticket information to the at least one forwarding node according to the forwarding path.

15. An access control method, performed by an access gateway, the method comprising:
receiving a signaling request from a client, wherein the signaling request comprises a source address and a destination address of a service packet to be sent;
incorporating a ticket application flag into the signaling request, and sending, as a signaling request initiating device, the signaling request carrying the ticket application flag to a ticket request agent device;
receiving a ticket application result returned by the ticket request agent device according to the signaling request, wherein the ticket application result comprises a forwarding path and ticket information of each of at least one forwarding node in the forwarding path; and
incorporating the ticket information to a service packet to be subsequently sent by the client, and sending the service packet carrying the ticket information to the at least one forwarding node according to the forwarding path.

16. An electronic device, comprising:
a memory, configured to store a program; and
a processor, configured to execute the program stored in the memory, wherein the program, when executed by the processor, causes the processor to perform the access control method of any of claims 1 to 15.

17. A storage medium, storing a computer-executable instruction which, when executed by a processor, causes the processor to perform the access control method of any of claims 1 to 15.
